# EUROPÄISCHE PATENTSCHRIFT

(11) **EP 1 270 140 B1**
(45) Veröffentlichungstag und Bekanntmachung des Hinweises auf die Patenterteilung: **08.08.2007**
(21) Anmeldenummer: 02013669.3
(22) Anmeldetag: 20.06.2002
(51) Int. Cl.: B23K 37/047, B23K 37/053

(54) **Anlage zum Zusammenfügen und Längsschweissen von aus Blechen o.dgl. gebogenen Rohren**
Apparatus for assembling and longitudinal welding of sheets or bent tubes
Dispositif pour assembler et souder longitudinalement des tôles ou des tubes cintrés

(30) Priorität: 29.06.2001 DE 10131461
(43) Veröffentlichungstag der Anmeldung: 02.01.2003
(73) Patentinhaber: Theodor Gräbener GmbH & Co. KG, 57250 Netphen-Werthenbach (DE)
(72) Erfinder: Kapp, Dieter, 57234 Wilnsdorf (DE)
(74) Vertreter: Pürckhauer, Rolf

(56) Entgegenhaltungen:
- DE-C- 3 113 769
- JP-A- 48 100 365
- US-A- 1 952 319

## Beschreibung

Die Erfindung bezieht sich auf eine Anlage zum Zusammenfügen und Längsschweißen von aus Blechen o.dgl. gebogenen Rohren, bestehend aus einem Anlagenbett, an dessen Seiten bzw. Ecken Ständer angeordnet sind, wobei auf der oberen Tischfläche des Anlagenbettes ein Rollengang vorgesehen ist, auf dem die Rohre in Längsrichtung bewegt werden, einer am oberen Ende der Ständer angebrachten Traverse, einem an der Traverse angebrachten und vertikal verfahrbaren Arbeitskopf mit einer in Längsrichtung zwischen Abrolleinrichtungen angeordneten Schweißeinrichtung, und seitlich angeordneten, vertikal verfahrbaren und in Querrichtung zustellbaren Führungseinrichtungen mit Rollen. (Siehe US-A-1 952 319).

Beim Längsschweißen von aus Blechen o.dgl. gebogenen Rohren, die im allgemeinen an den zueinander gerichteten Kanten des Schlitzes eine Nahtvorbereitung aufweisen, tritt zumeist das Problem auf, daß im Bereich des zu schweißenden Schlitzes ein Kantenversatz auftritt, der auch über die gesamte Länge des Rohres sehr unterschiedlich sein kann. Oft ist auch der Spalt des Schlitzes zum Schweißen zu groß, wobei in der Regel der Spalt ebenfalls über die gesamte Länge des Rohres unterschiedlich ist.

Um die vorgenannten Probleme zu beheben, sind Anlagen bekannt, die im Bereich des Schlitzes senkrecht auf das zu schweißende Rohr drücken. Bei diesem senkrechten Drücken kommt es zumeist vor, daß der Spalt des Schlitzes zu eng zusammengedrückt oder zu weit geöffnet wird, was beides zum Schweißen des Rohres ungünstig ist.

Der Erfindung liegt daher die Aufgabe zugrunde, eine Anlage der angegebenen Gattung zu schaffen, mit der ein Kantenversatz von längszuschweißenden Rohren sehr einfach ausgeglichen und individuell angepaßt werden kann und der Spalt des Schlitzes entsprechend den Anforderungen beim Schweißen erhalten bleibt.

Diese Aufgabe wird erfindungsgemäß durch die Kennzeichnungsmerkmale des Patentanspruchs 1 gelöst.

Zweckmäßige Weiterbildungen der Erfindung sind in den Unteransprüchen gekennzeichnet.

Die erfindungsgemäße Anlage zeichnet sich vor allem dadurch aus, daß die beiden nebeneinander angeordneten Räder der Abrolleinrichtung am Arbeitskopf jeweils auf eine Kantenseite des Schlitzes drücken. Durch den Drehpunkt auf der Längsmittelachse und den durch den seitlich neben der Mittelachse an dem Hebel angreifenden Hydraulik-Zylinder werden die Räder mit ihren Mittelachsen gemeinsam geschwenkt, d.h. die hochstehende Kante des Rohres wird durch ein Rad in seine Position gedrückt, wobei die niederstehende Kante des Rohres von dem anderen Rad entlastet wird. Eine Spaltveränderung tritt dabei nicht auf.

Durch die Meßeinrichtung können die Räder individuell dem jeweiligen Kantenversatz angepaßt werden, so daß beim Schweißen der Schlitz immer den Anforderungen entspricht.

Ein Ausführungsbeispiel der erfindungsgemäßen Anlage wird nachfolgend anhand der Zeichnung beschrieben. Dabei zeigt
- Fig. 1: eine Vorderansicht der Anlage,
- Fig. 2: die Seitenansicht der Anlage,
- Fig. 3: eine Vorderansicht der Abrolleinrichtung, die an einem Rohr angreift, das einen Kantenversatz aufweist, und
- Fig. 4: die Vorderansicht der Abrolleinrichtung nach dem Schwenken der Ränder zum Kantenausgleich.

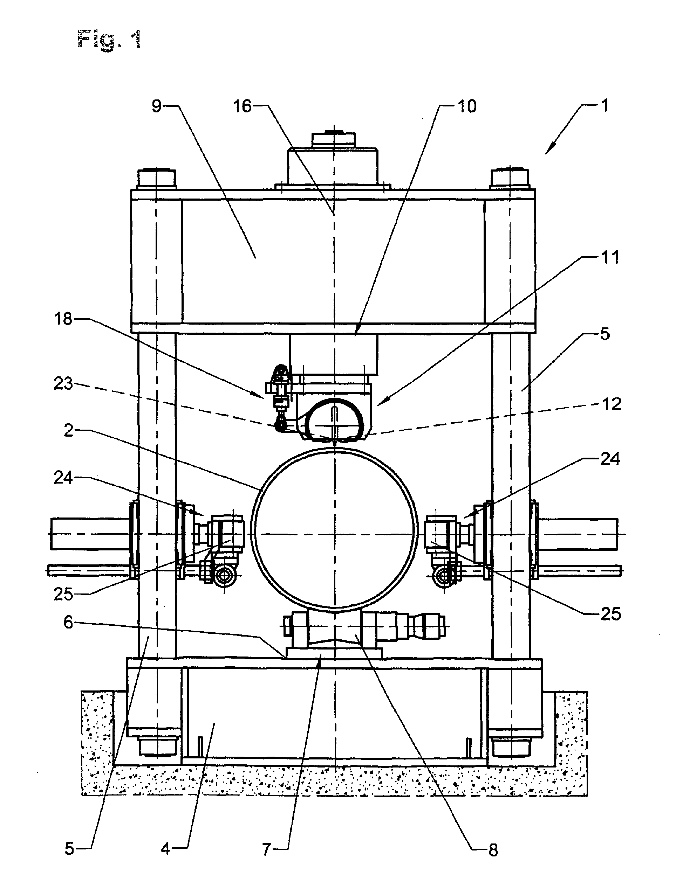

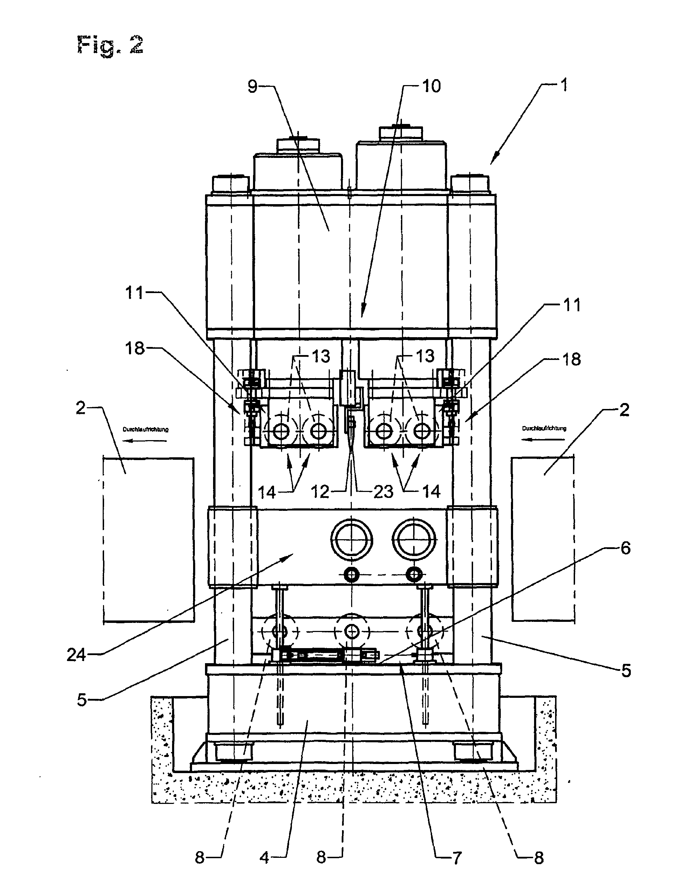

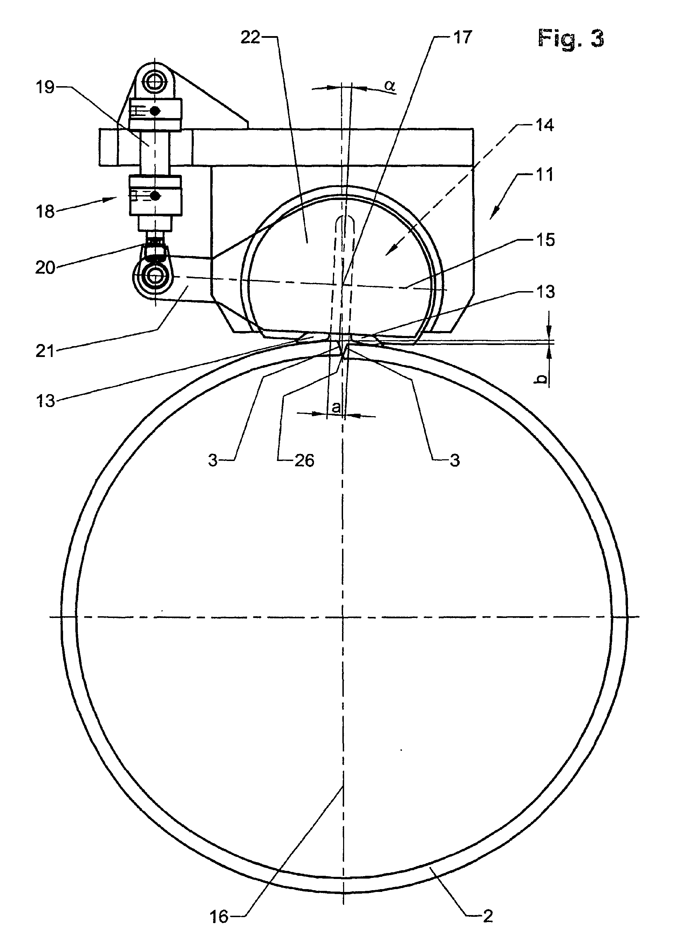

Die in Fig. 1 und 2 dargestellte Anlage 1 zum Zusammenfügen und Längsschweißen von aus Blechen o.dgl. gebogenen Rohren 2, das vorzugsweise an seinen Längskanten 3 (siehe Fig. 3) eine Schweißnahtvorbereitung ausweist, besteht aus einem Anlagenbett 4, an dessen Seiten bzw. Ecken Ständer 5 angeordnet bzw. eingespannt sind. Auf der oberen Tischfläche 6 des Anlagenbettes 4 ist ein Rollengang 7 vorgesehen, auf dem die Rohre 2 unterschiedlichster Größen aufliegen und in Längsrichtung bewegt werden. Dazu sind die Rollen 8 des Rollenganges 7 diaboloförmig ausgebildet.

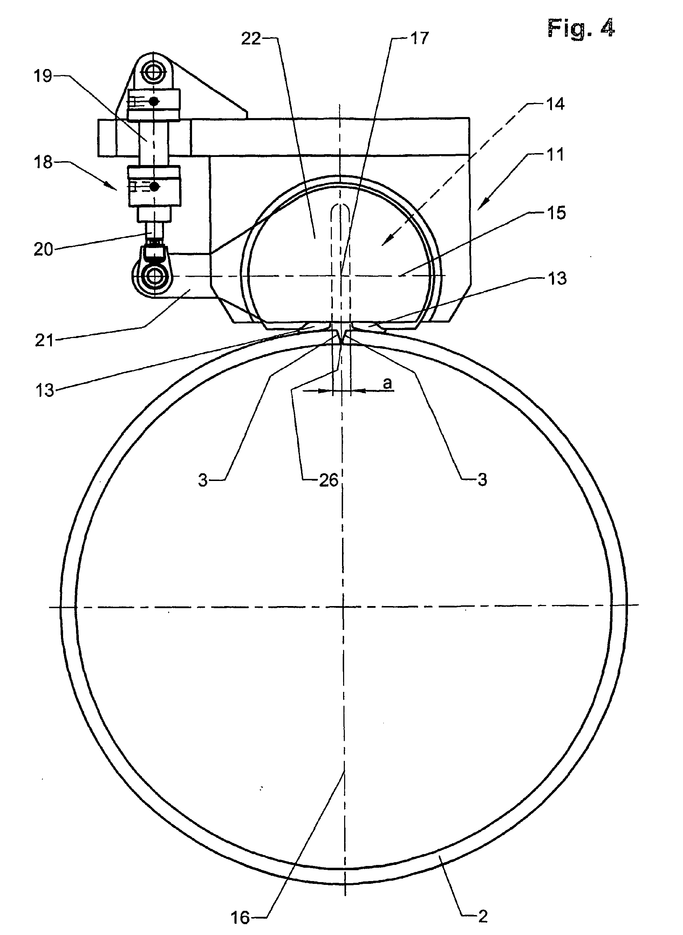

Am oberen Ende der Ständer 5 ist eine Traverse 9 angebracht, an der wiederum ein vertikal verfahrbarer Arbeitskopf 10 vorgesehen ist, der eine in Längsrichtung zwischen zwei Abrolleinrichtungen 11 angeordnete Schweißeinrichtung 12 aufweist. Die Abrolleinrichtungen 11 bestehen jeweils mindestens aus einem zwei nebeneinander mit Abstand a angeordneten Rädern 13 aufweisenden Räderpaar 14, die mit ihren konzentrischen Mittelachsen 15 gemeinsam um eine auf der Längsmittelachse 16 der Anlage 1 liegenden Drehpunkt 17 mittels einer Schwenkvorrichtung 18 drehbar sind (siehe hierzu insbesondere Fig. 3 und 4).

Wie in Fig. 2 ersichtlich, weist vorzugsweise jede Abrolleinrichtung 11 zwei in Längsrichtung hintereinander angeordnete Räderpaare 14 auf.

Die Schwenkeinrichtung 18 besteht aus einem seitlich neben der Längsmittelachse 16 der Anlage 1 schwenkbar gelagerten Hydraulik-Zylinder 19, der mit seiner Kolbenstange 20 an einem Hebel 21 angreift, der mit einem Gehäuse 22 verbunden ist, in dem die Räderpaare 14 gelagert sind.

In Längsrichtung vor der Schweißeinrichtung 12 ist eine Meßeinrichtung 23 vorgesehen, die vorzugsweise eine Laser-Meßeinrichtung ist.

Seitlich weist die Anlage 1 vertikal verfahrbare und in Querrichtung zustellbare Führungseinrichtungen 24 mit Rollen 25 auf, die individuell unterschiedlichen Größen von Rohren 2 angepaßt werden können (siehe Fig. 1).

Nachfolgend wird noch kurz die Arbeitsweise der Anlage beschrieben.

Ein Rohr 2 wird der Anlage 1 zugeführt, wobei das Rohr auf dem Rollengang 7 transportiert wird. Die seitlichen Führungseinrichtungen 24 sowie der Arbeitskopf 10 mit den Abrolleinrichtungen 11 werden an das Rohr 2 herangeführt. Anschließend beginnt die Meßeinrichtung 23 den Kantenversatz b und den Spalt des Schlitzes 26 des Rohres 2 zu messen, woraus sich der notwendige Drehwinkel α ergibt, den die Schwenkeinrichtung 18 ausgleichen muß. Dazu wird der Hydraulikzylinder 19 mit Druck beaufschlagt und die Kolbenstange 20 zieht oder drückt den Hebel 21, wobei das Gehäuse 22 und die Räder 13 um den Drehpunkt 17 drehen. Dabei wird die hochstehende Kante 3 des Rohres 2 durch ein Rad 13 in seine Position gedrückt, wobei die niederstehende Kante 3 des Rohres 2 von dem anderen Rad 13 entlastet wird.

Sobald die Anfangsposition ermittelt ist, kann der Schweißvorgang an den Längskanten 3 beginnen. Die CNC-Steuerung der Anlage 1 sorgt dafür, daß die Rollenpaare 14 ständig an den Kantenversatz b ausgleichen.

## Patentansprüche

1. Anlage (1) zum Zusammenfügen und Längsschweißen von aus Blechen o.dgl. gebogenen Rohren (2), bestehend aus einem Anlagenbett (4), an dessen Seiten bzw. Ecken Ständer (5) angeordnet sind, wobei auf der oberen Tischfläche (6) des Anlagenbettes (4) ein Rollengang (7) vorgesehen ist, auf dem die Rohre (2) in Längsrichtung bewegt werden, einer am oberen Ende der Ständer (5) angebrachten Traverse (9), einem an der Traverse (9) angebrachten und vertikal verfahrbaren Arbeitskopf (10) mit einer in Längsrichtung zwischen Abrolleinrichtungen angeordneten Schweißeinrichtung (12), und seitlich angeordneten, vertikal verfahrbaren und in Querrichtung zustellbaren Führungseinrichtungen (24) mit Rollen (25), **dadurch gekennzeichnet, daß** die Abrolleinrichtungen (11) am Arbeitskopf (10) jeweils mindestens aus einem zwei nebeneinander mit Abstand (a) angeordnete Räder (13) aufweisenden Räderpaar (14) bestehen, wobei die Räder (13) mit ihren konzentrischen Mittelachsen (15) gemeinsam um einen auf der Längsmittelachse (16) der Anlage (1) liegenden Drehpunkt (17) mittels einer Schwenkeinrichtung (18) drehbar sind.

2. Anlage nach Anspruch 1, **dadurch gekennzeichnet, daß** jede Abrolleinrichtung (11) zwei in Längsrichtung hintereinander angeordnete Räderpaare (14) aufweist.

3. Anlage nach Anspruch 1 oder 2, **dadurch gekennzeichnet, daß** die Schwenkeinrichtung (18) aus einem seitlich neben der Längsmittelachse (16) der Anlage (1) schwenkbar gelagerten Hydraulik-Zylinder (19) besteht, der mit seiner Kolbenstange (20) an einem Hebel (21) angreift, der mit einem Gehäuse (22) verbunden ist, in dem die Räderpaare (14) gelagert sind.

4. Anlage nach einem der Ansprüche 1 bis 3, **dadurch gekennzeichnet, daß** in Längsrichtung vor der Schweißeinrichtung (12) eine Meßeinrichtung (23) vorgesehen ist.

5. Anlage nach Anspruch 4, **dadurch gekennzeichnet, daß** die Meßeinrichtung (23) eine Laser-Meßeinrichtung ist.

## Claims

1. A machine (1) for joining together and longitudinal welding of pipes (2) bent up from sheet metal or the like, consisting of a machine bed (4) on whose sides or corners are arranged uprights (5), wherein a roller track (7) is provided on the upper table surface (6) of the machine bed (4), on which track the pipes (2) are moved in the longitudinal direction, a crosspiece (9) fitted on the upper ends of the uprights (5), a vertically movable working head (10) fitted on the crosspiece (9), with a welding device (12) arranged in the longitudinal direction between rolling devices, and laterally arranged, vertically movable guide devices (24) with rollers (25), which can be advanced in the transverse direction, **characterized in that** the rolling devices (11) on the working head (10) each consist of at least one roller pair (14) comprising two wheels (13) arranged alongside one another with a spacing (a), wherein the wheels (13) can be swivelled in common with their concentric central axes (15) about a centre of rotation (17) lying on the longitudinal central axis (16) of the machine (1) by means of a swivelling device (18).

2. A machine according to claim 1, **characterized in that** each rolling device (11) comprises two wheel pairs (14) arranged one after the other in the longitudinal direction.

3. A machine according to claim 1 or 2, **characterized in that** the swivelling device (18) consists of a hydraulic cylinder (19) pivotally arranged to the side of the longitudinal central axis (16) of the machine (1), whose piston rod (20) engages a lever (21) which is connected to a housing (22) in which the wheel pairs (14) are mounted.

4. A machine according to any of claims 1 to 3, **characterized in that** a measuring device (23) is provided ahead in the longitudinal direction of the welding device (12).

5. A machine according to claim 4, **characterized in that** the measuring device (23) is a laser measuring device.

## Revendications

1. Installation (1) d'assemblage et de soudage longitudinal de tubes (2) courbé en tôles ou analogue, constituée d'un banc (4) d'installation sur les côtés ou les coins duquel sont disposés des montants (5), dans laquelle il est prévu sur la surface (6) supérieure de table du banc (4) d'installation un passage (7) à galet, sur lequel les tubes (2) sont déplacés dans la direction longitudinale, d'une traverse (9) montée à l'extrémité supérieure des montants (5), d'une tête (10) de travail montée sur la traverse (9), pouvant se déplacer verticalement et ayant un dispositif (12) de soudage disposé dans la direction longitudinale entre des dispositifs de roulement, et des dispositifs (24) de guidage disposés latéralement, mobiles verticalement, pouvant être avancés dans la direction transversale et ayant des galets (25), **caractérisée en ce que** les dispositifs (11) de roulement sur la tête (10) de travail sont constitués respectivement d'au moins une paire (14) de roues ayant deux roues (13) disposées l'une à côté de l'autre à distance (a), les roues (13) pouvant tourner au moyen d'un dispositif (18) de mise en rotation par leurs axes (15) médians concentriques conjointement autour d'un point (17) de rotation se trouvant sur l'axe (16) médian longitudinal de l'installation (1).

2. Installation suivant la revendication 1, **caractérisée en ce que** chaque dispositif (11) de roulement a deux paires (14) de roues disposées l'une derrière l'autre dans la direction longitudinale.

3. Installation suivant la revendication 1 ou 2, **caractérisée en ce que** le dispositif (18) de rotation est constitué d'un vérin (19) hydraulique monté tournant latéralement à côté de l'axe (16) médian longitudinal de l'installation (1) et attaquant par sa tige (20) de piston un levier (21) qui est relié à un carter (22) dans lequel sont montées les paires (14) de roues.

4. Installation suivant l'une des revendications 1 à 3,
**caractérisée en ce qu'**un dispositif (23) de mesure est prévu dans la direction longitudinale en amont du dispositif (12) de soudage.

5. Installation suivant la revendication 4, **caractérisée en ce que** le dispositif (23) de mesure est un dispositif de mesure laser.
